# EUROPEAN PATENT APPLICATION

(11) **EP 1 403 167 A1**
(43) Date of publication of application: **31.03.2004**
(21) Application number: 02256759.8
(22) Date of filing: 27.09.2002
(51) Int. Cl.: B62D 1/06

(54) **Steering wheel cover having a decorative lighting unit**

(71) Applicant: Huang, Yuan-Yuan, Kuei-Jen Hsiang, Tainan Hsien (TW)
(72) Inventor: Huang, Yuan-Yuan, Kuei-Jen Hsiang, Tainan Hsien (TW)
(74) Representative: Moir, Michael Christopher

(57) **Abstract**

A steering wheel cover (1) includes an annular cover body (3, 5, 70, 91) having a C-shaped cross-section in radial directions, an inner wall surface (11, 55, 73, 95), and an outer wall surface (10, 50, 72). A lighting unit (4, 6, 8, 92) is mounted on the outer wall surface (10, 50, 72) of the cover body (3, 5, 70, 91) and includes a lamp (41) and a control circuit module (42) coupled electrically to the lamp (41) such that the lighting unit (4) generates light that radiates from the outer wall surface (10, 50, 72) of the cover body (3, 5, 70, 91).

## Description

This invention relates to a steering wheel cover, more particularly to a steering wheel cover having a decorative lighting unit.

A conventional steering wheel cover is typically used to cover a steering wheel, and has a C-shaped cross-section in radial directions. The steering wheel cover is used to improve handleability and enhance the aesthetic effect of the steering wheel. However, consumers nowadays are not easily satisfied with steering wheel covers that merely provide the aforesaid functions.

Therefore, the main object of the present invention is to provide a steering wheel cover having a decorative lighting unit to enhance the aesthetic effect of the steering wheel cover.

According to this invention, the steering wheel cover includes an annular cover body having a center axis, a C-shaped cross-section in radial directions, an inner wall surface that confines an annular receiving space for receiving a steering wheel, and an outer wall surface. The steering wheel cover is characterized by a lighting unit mounted on the cover body and electrically operable so as to generate light that radiates from the outer wall surface of the cover body.

Other features and advantages of the present invention will become apparent in the following detailed description of the preferred embodiments of the invention, with reference to the accompanying drawings, in which:
Fig. 1 is a fragmentary perspective view of a first preferred embodiment of the steering wheel cover of the present invention;
Fig. 2 is a horizontal cross-sectional view of the first preferred embodiment of the present invention;
Fig. 3 is a fragmentary perspective view to illustrate an assembly of conductive wires, insulator sheaths, and lamps of a lighting unit of the first preferred embodiment of the present invention;
Fig. 4 is a fragmentary perspective view of a second preferred embodiment of the steering wheel cover of the present invention;
Fig. 5 is a vertical cross-sectional view of a third preferred embodiment of the steering wheel cover of the present invention;
Fig. 6 is a fragmentary perspective view of a fourth preferred embodiment of the steering wheel cover of the present invention; and
Fig. 7 is a fragmentary perspective view of a fifth preferred embodiment of the steering wheel cover of the present invention.

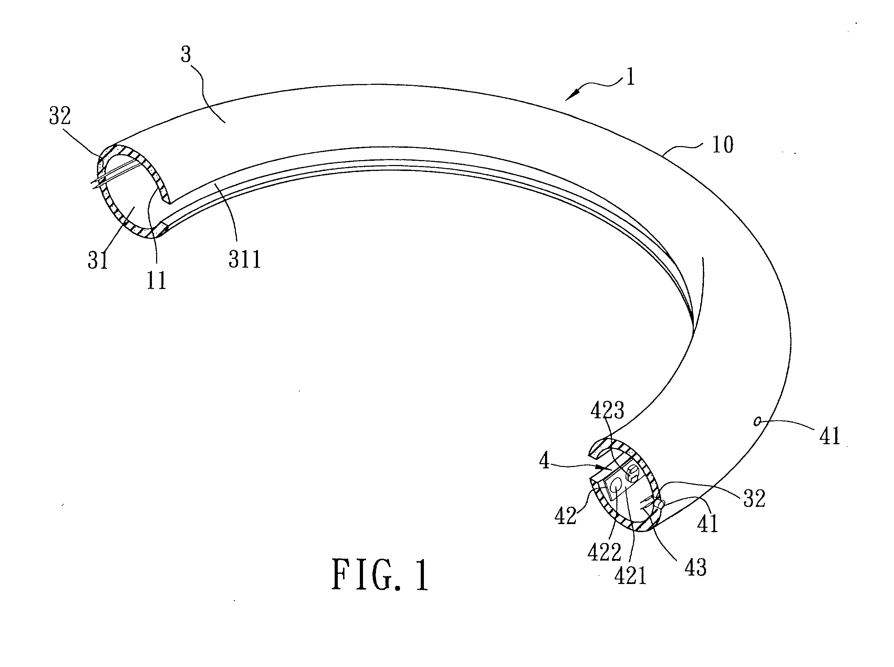

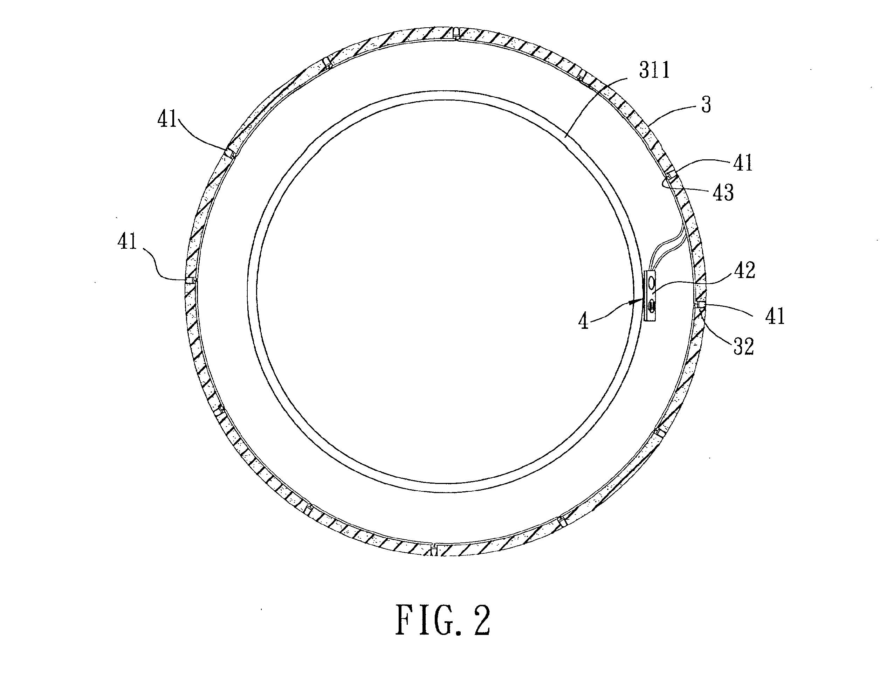

Referring to Figs. 1 and 2 , the first preferred embodiment of the steering wheel cover 1 of the present invention is adapted to cover a steering wheel (not shown) . The steering wheel cover 1 includes an annular cover body 3 having a center axis (X) and a C-shaped cross-section in radial directions. The steering wheel cover 1 further includes a lighting unit 4 mounted on the cover body 3 and electrically operable so as to generate light.

The annular cover body 3 has an inner wall surface 11 that confines an annular receiving space 31 for receiving the steering wheel, and an outer wall surface 10 . The cover body 3 is formed with a plurality of angularly spaced apart lamp holes 32 that extend from the inner wall surface 11 through the outer wall surface 10. Furthermore, the cover body 3 has an inner peripheral portion adjacent to and surrounding the center axis (X), and formed with a slot 311 that extends from the inner wall surface 11 through the outer wall surface 10.

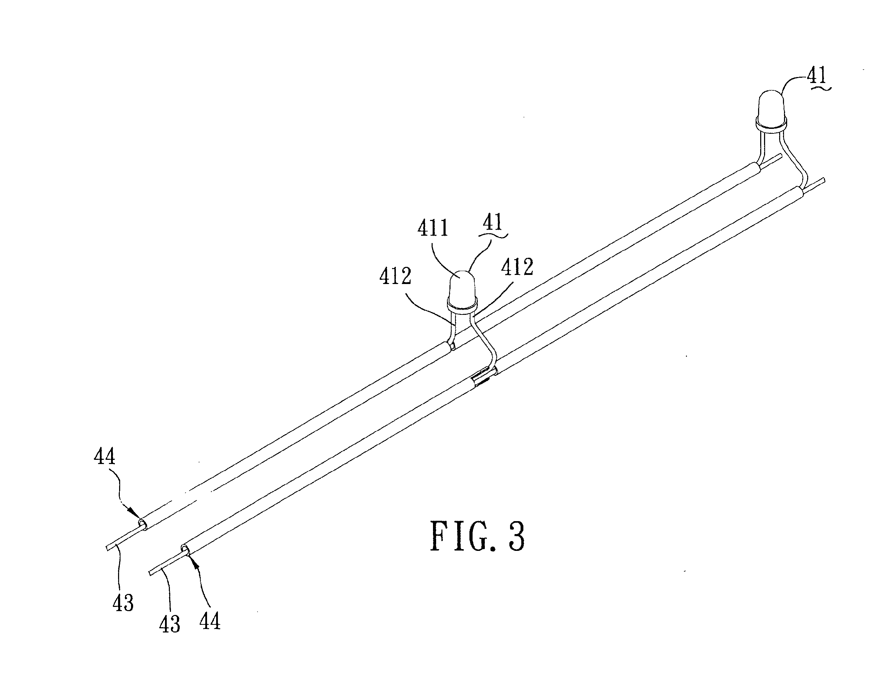

With further reference to Fig. 3, the lighting unit 4 includes a pair of conductive wires 43, a pair of flexible insulator sheaths 44 sleeved on the conductive wires 43, respectively, a number of lamps 41, and a control circuit module 42. Each lamp 41 has a pair of terminals 412 with bent contact portions extending through and fittingly disposed in the insulator sheaths 44 to connect electrically and respectively with the conductive wires 43. To avoid short-circuiting, it is desirable that only a small portion of the terminals 412 is exposed, i.e., the terminals 412 are mostly covered by the sheaths 44. Note that the connection between each lamp 41 and the conductive wires 43 does not require soldering, thereby facilitating assembly and maintenance of the lighting unit 4 . In this embodiment, each lamp 41 is a light emitting diode having a light emitting portion 411 that is disposed in a corresponding lamp hole 32 , and is coupled electrically to the control circuit module 42 by means of the conductive wires 43. Preferably, the insulator sheaths 44 have different colors, such as black and red, for polarity indication.

The control circuit module 42 includes a circuit board 421 mounted on the inner wall surface 11 of the cover body 3, an integrated circuit 422 mounted on the circuit board 421 and connected electrically to the conductive wires 43 and thus the lamps 41, and a battery 423, such as a mercury cell, mounted removably on the circuit board 421 and connected electrically to the integrated circuit 422. The circuit board 421 may be glued to the inner surface 11 of the cover body 3, and the integrated circuit 422 may be covered by an insulating coating for fixing on the circuit board 421. The integrated circuit 422 may be configured to control blinking operation of the lamps 41. The slot 311 formed in the cover body 3 permits mounting of the control circuit module 42 on the inner wall surface 11.

Therefore, when the steering wheel cover 1 is placed on a steering wheel, the lighting unit 4 mounted on the cover body 3 is controlled by the control circuit module 42 to generate light that blinks as desired and that radiates from the outer wall surface 10 of the cover body 3.

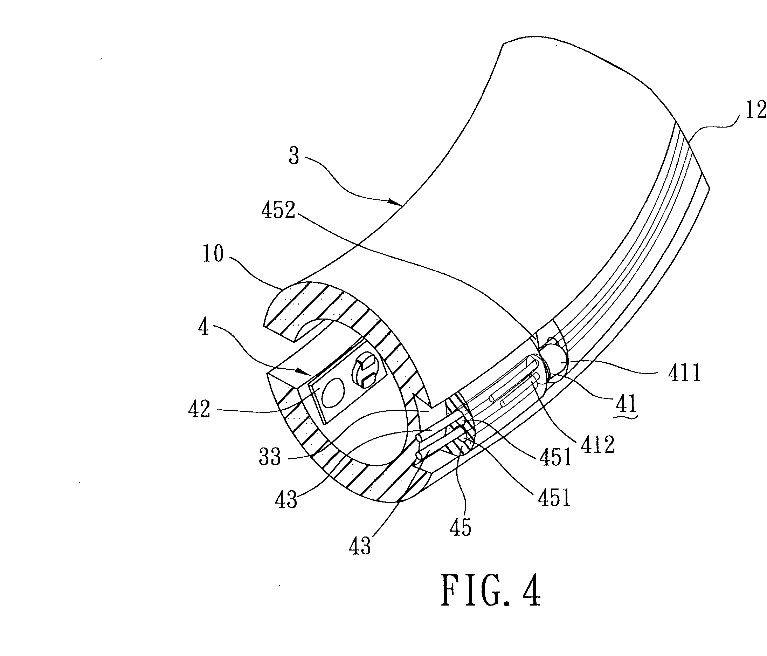

Referring to Fig. 4, the second preferred embodiment of the present invention is characterized in that the cover body 3 has an outer peripheral portion 12 and is formed with an annular groove 33 along the outer wall surface 10 at the outer peripheral portion 12. The lighting unit 4 includes an insert strip 45, a pair of conductive wires 43 connected to a control circuit module.42, and a number of lamps 41 (only one is shown) . The design of the control circuit module 42 is similar to that of the previous embodiment of the present invention.

The insert strip 45 is made of transparent plastic material and has a shape corresponding to that of the annular groove 33. The insert strip 45 is fitted in the annular groove 33 and is formedwith a pair of wire holes 451 extending along the outer peripheral portion 12 of the outer wall surface 10 of the cover body 3 . The insert strip 45 is further formed with a number of spaced-apart lamp notches 452 (only one is shown) , each of which is communicated with the wire holes 451.

The conductive wires 43 are disposed respectively in the wire holes 451 of the insert strip 45.

Each lamp 41 is a light emitting diode having a light emitting portion 411 that is disposed in a corresponding lamp notch 452, and further having a pair of terminals 412 with contact portions extending tightly into the wire holes 451 to connect electrically and respectively with the conductive wires 43. Like the previous embodiment, connection between each lamp 41 and the conductive wires 43 does not require soldering. In addition, such assembly results in that the replacement and the maintenance of the lamps 41 can be easily preformed.

In this embodiment, because the insert strip 45 is made of a transparent material, light can be guided to further enhance the aesthetic effect.

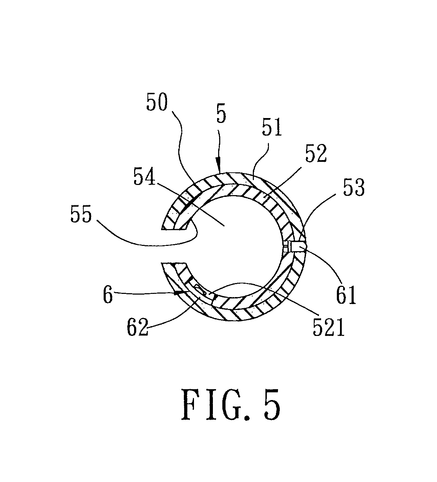

Referring to Fig. 5, the third preferred embodiment of the present invention includes a cover body 5 and a lighting unit 6.

The cover body 5 includes an outer cover layer 51 formed with an outer wall surface 50, and an inner cover layer 52 formed with an inner wall surface 55 which confines an annular receiving space 54 . The cover body 5 is formed with a plurality of lamp holes 53 (only one is shown) that extend from the inner wall surface 55 through the outer wall surface 50. Moreover, the cover body 5 is further formed with a module mounting recess 521 in the inner cover layer 52.

Like the first preferred embodiment, the lighting unit 6 includes apluralityof lamps 61 (only one is shown) disposed respectively in the lamp holes 53, and a control circuit module 62 mounted in the module mounting recess 521 and coupled electrically to the lamps 61. Thus, the light emitted from the lamps 61 and controlled by the control circuit module 62 radiates from the outer wall surface 50 of the cover body 5.

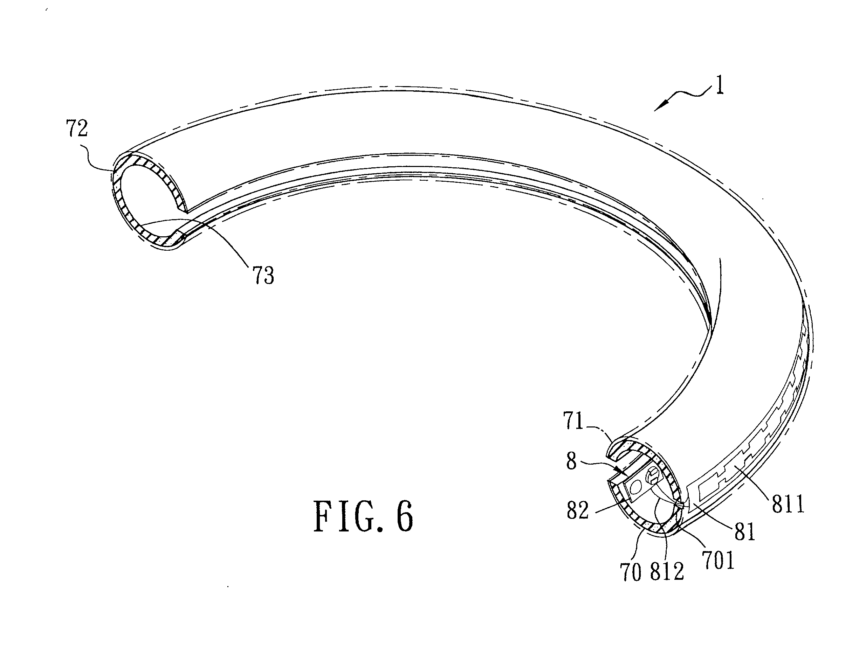

Referring to Fig. 6, the fourth preferred embodiment of the steering wheel cover of this invention includes a cover body 70 having a C-shaped cross section in radial directions and a lighting unit 8 . The cover body 70 is formed with a through hole 701. Moreover, the lighting unit 8 includes conductive wires 812, a light emitting plate 81 mounted on the outer wall surface 72 of the cover body 70, and a control circuit module 82 mounted on the inner wall surface 73 of the cover body 70. Particularly, the light emitting plate 81 is an electroluminescent plate configured with a light emitting portion 811. The conductive wires 812 pass through the through hole 701 so as to electrically connect the light emitting plate 81 to the control circuit module 82.

Furthermore, a transparent layer 71 covers the outer wall surface 72 of the cover body 70 and is used to protect the light emitting plate 81.

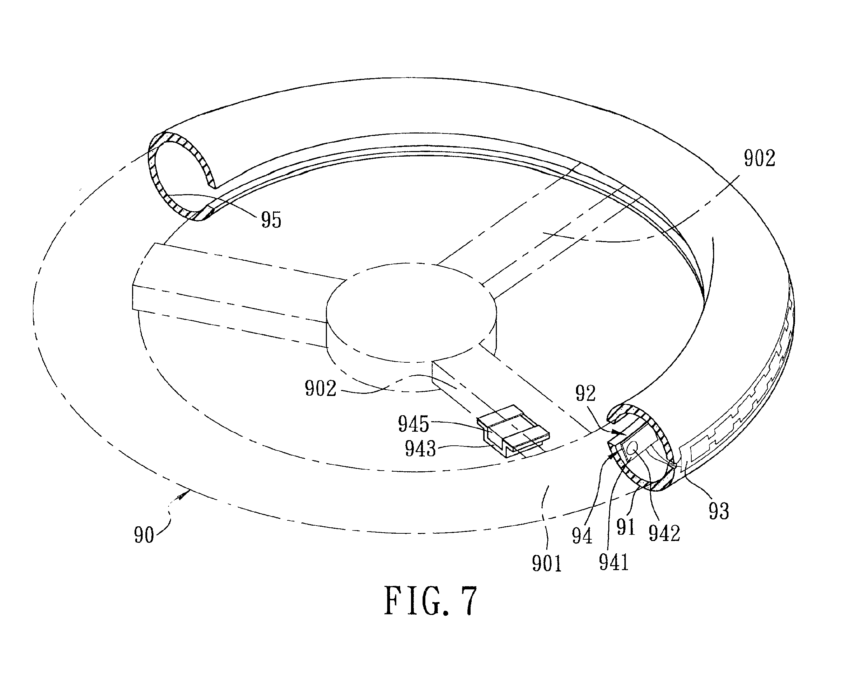

Referring to Fig. 7, the fifth preferred embodiment of the present invention is used to cover a steering wheel 90 having a peripheral wall 901. The steering wheel 90 has a plurality of arms 902 connected to the peripheral wall 901 of the steering wheel 90. The steering wheel cover includes a cover body 91 covering the peripheral wall 901 of the steering wheel 90 and a lighting unit 92.

The lighting unit 92 is mounted on the cover body 91 and includes a light emitting plate 93 and a control circuit module 94 electrically connected to the light emitting plate 93. The control circuit module 94 has a circuit board 941 mounted on the inner wall surface 95 of the circuit board 941, an integrated circuit 942 mounted on the circuit board 941, and a housing 943 removable mounted on one of the arms 902 of the steering wheel 90, such as with the use of double-sided adhesive tape. A battery 945 is positioned inside the housing 943 and is electrically connected to the circuit board 941. Therefore, a battery 945 with a larger capacity may be used since the battery 945 is placed in the housing 943 and is not mounted on the cover body 90.

Moreover, the control circuit module 42, 62, 82, 94 in the embodiments of the present invention may be designed with switches or other similar designs. The battery 423, 945 may be replaced by other electric sources in the car, such as a cigarette lighter socket, for providing electricity to the control circuit module 42, 62, 82, 94. In conclusion, the steering wheel cover having a decorative lighting unit according to the present invention can effectively improve the aesthetic appearance of a steering wheel.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. Reference numerals appearing in the claims are illustrative only and the claims shall be interpreted as if they are not present.

The description of the invention with reference to the drawings is by way of example only.

The text of the abstract filed herewith is repeated here as part of the specification.

A steering wheel cover 1 includes an annular cover body 3, 5, 70, 91 having a C-shaped cross-section in radial directions, an inner wall surface 11, 55, 73, 95, and an outer wall surface 10, 50, 72. A lighting unit 4, 6, 8, 92 is mounted on the outer wall surface 10, 50, 72 of the cover body 3, 5, 70, 91 and includes a lamp 41 and a control circuit module 42 coupled electrically to the lamp 41 such that the lighting unit 4 generates light that radiates from the outer wall surface 10, 50, 72 of the cover body 3, 5, 70, 91.

## Claims

1. A steering wheel cover including an annular cover body (3, 5, 70, 91) having a center axis (X), a C-shaped cross-section in radial directions, an inner wall surface (11, 55, 73, 95) that confines an annular receiving space (31, 54) for receiving a steering wheel, and an outer wal l surface (10, 50, 72) , said steering wheel cover being **characterized by** a lighting unit (4, 6, 8, 92) mounted on said cover body (3, 5, 70, 91) and electrically operable so as to generate light that radiates from said outer wall surface (10, 50, 72) of said cover body (3, 5, 70, 91) .

2. The steering wheel cover as claimed in Claim 1, **characterized in that** said cover body (3) is formed with at least one lamp hole (32) that extends from said inner wall surface (11) through said outer wall surface (10) , said lighting unit (4) including a lamp (41) disposed in each said lamp hole (32) , and a control circuit module (42) coupled electrically to said lamp (41) .

3. The steering wheel cover as claimed in Claim 2, further **characterized in that** the lamp (41) is a light emitting diode.

4. The steering wheel cover as claimed in Claim 2, further **characterized in that** the control circuit module (42) is mounted on said inner wall surface (11) of said cover body (3).

5. The steering wheel cover as claimed in Claim 4, further **characterized in that** said cover body (3) has an inner peripheral portion adj acent to and surrounding the center axis (X) and formed with a slot (311) that extends from said inner wall surface (11) through said outer wall surface (10) to permit mounting of said control circuit module (42) on said inner wall surface (11).

6. The steering wheel cover as claimed in Claim 4, further **characterized in that** said control circuit module (42) includes a circuit board (421) mounted on said inner wall surface (11) , an integrated circuit (422) mounted on said circuit board (421) and connected electrically to said lamp (41) , and a battery (423) mounted removably on said circuit board (421) and connected electrically to said integrated circuit (422).

7. The steering wheel cover as claimed in Claim 1, **characterized in that** said lighting unit (4) includes:
a pair of conductive wires (43);
a pair of insulator sheaths (44) sleeved on said conductive wires (43), respectively; and
at least one lamp (41) having a pair of terminals (412) with contact portions extending through and disposed in said insulator sheaths (44) to connect electrically and respectively with said conductive wires (43).

8. The steering wheel cover as claimed in Claim 7, further **characterized in that** said insulator sheaths (44) have different colors for polarity indication.

9. The steering wheel cover as claimed in Claim 1, **characterized in that** said cover body (3) has an outer peripheral portion (12) and is formed with an annular groove (33) along said outer wall surface (10, 50, 72) at said outer peripheral portion (12), said lighting unit (4) including:
an insert strip (45) fitted in said annular groove (33) and formed with a pair of wire holes (451) therein, said insert strip (45) being further formed with at least one lamp notch (452) that is communicated with said wire holes (451);
a pair of conductive wires (43) disposed respectively in said wire holes (451); and
a lamp (41) disposed in each said lamp notch (452) and having a pair of terminals (412) with contact portions extending into said wire holes (451) to connect electrically and respectively with said conductive wires (43) .

10. The steering wheel cover as claimed in Claim 1, **characterized in that** said cover body (5) includes an outer cover layer (51) formed with said outer wall surface (50), and an inner cover layer (52) formed with said inner wall surface (55) , said cover body (5) being formed with at least one lamp hole (53) that extends from said inner wall surface (55) through said outer wall surface (50) , said cover body (5) being further formed with a module mounting recess (521) in said inner cover layer (52), said lighting unit (6) including a lamp (61) disposed in each said lamp hole (53) , and a control circuit module (62) mounted in said module mounting recess (521) and coupled electrically to said lamp (61).

11. The steering wheel cover as claimed in Claim 1, **characterized in that** said lighting unit (8) includes a light emitting plate (81) mounted on said outer wall surface (72) of said cover body (70).

12. The steering wheel cover as claimed in Claim 11, further , **characterized in that** said light emitting plate (81) is an electroluminescent plate.

13. The steering wheel cover as claimed in Claim 11, further **characterized by** a transparent layer (71) covering said outer wall surface (72) of said cover body (70) to protect said light emitting plate (81).
